# EUROPEAN PATENT SPECIFICATION

(11) **EP 1 361 020 B1**
(45) Date of publication and mention of the grant of the patent: **05.10.2005**
(21) Application number: 03076167.0
(22) Date of filing: 17.04.2003
(51) Int. Cl.: B23Q 11/00, B23Q 1/00

(54) **Connection device for electric power and dust suction for a portable electrical tool for machining surfaces**
Elektrische Anschlussvorrichtung für elektrische Energie und Staubsaugung für ein tragbares elektrisches Werkzeug für Flächenbearbeitung
Dispositif de raccordement pour énergie électrique et aspirateur de poussières pour un outil électrique portable de surfaçage

(30) Priority: 06.05.2002 IT MI20020950
(43) Date of publication of application: 12.11.2003
(73) Proprietor: Valentini, Guido, 20132 Milano (IT)
(72) Inventor: Valentini, Guido, 20132 Milano (IT)
(74) Representative: Mittler, Enrico

(56) References cited:
- WO-A-99/13761
- US-A- 4 421 111

## Description

The present invention refers to a connection device for electric power and dust suction for a portable electrical tool suitable for machining surfaces

Portable electric tools for working surfaces are known having a flexible tube for the suction of dust residuals during the surface machining phases and on the outside of the flexible tube an electric cable for powering the tool

The position of the electric cable outside the flexible tube creates obstacle problems and makes the manoeuvring of the tool by the operator difficult, because the electric cable can hinder the movements of the operator

US-A-4 421 111 discloses a connection device according to the preamble of claim 1.

In view of the state of the technique described, the object of the present invention is to produce a connection device for electric power and dust suction, that does not have the problems of the known art.

In accordance with the present invention, said object is achieved by means of a connection device as defined in claim 1.

In addition said object is also reached by means of an apparatus for machining surfaces as defined in claim 3.

The characteristics and advantages of the present invention will appear evident from the following detailed desmiption of an embodiment thereof, illustrated as non-limiting example in the enclosed drawings, in which:
Figure 1 shows an axial section view of a connection device according to the present invention;
Figure 2 shows a perspective view of a first end part of the connection device in Figure 1;
Figure 3 shows a perspective view of a second end part of the connection device in Figure 1;
Figure 4 shows an axial section view of the area for connecting a portable electrical tool to the first end part of the connection device in Figures 1-3;
Figure 5 shows an axial section view of the area for connecting a suction and electric power group to the second end part of the connection device in Figures 1-3.

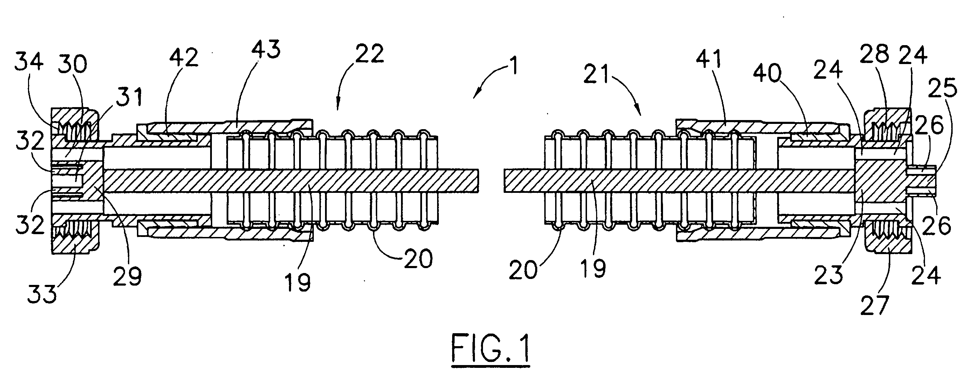

The connection device 1 illustrated as example in Figures 1-3 is suitable for being placed between any portable electric tool fitted with a conduit for machining dust suction and an electric power and dust suction group.

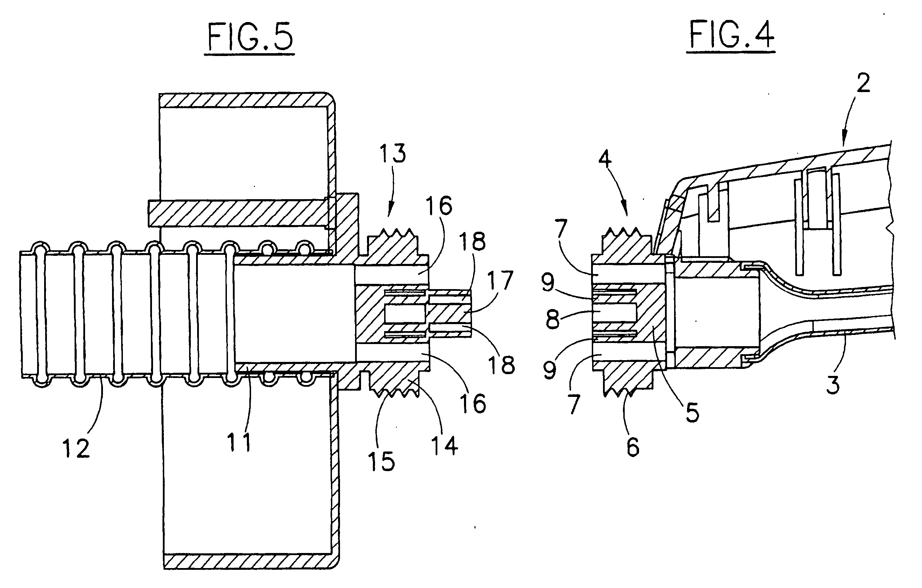

Also as an example, the connecting area of a portable tool 2 is shown in Fig. 4, whose conduit 3 for dust suction is fitted with a terminal connector 4 made up of a cylindrical body 5 with external threading 6, which is crossed axially by a circumferential succession of holes 7 communicating with the suction conduit 3. A cavity 8 with rectangular section constituting a female electric socket with two steady pins 9 also extends from the external face of the cylindrical body 5 inside the same body. The electric socket 8, shown only schematically in Fig. 4, is electrically connected to an electric motor (not shown) situated inside the tool 2.

Also as an example, there is shown in Fig. 5 the connecting area of an electric power and dust suction group 10, that can be either of the mobile or fixed type. The group 10 provides for a tube 11 for dust suction, to which a flexible tube 12 is attached for connection to an electric aspirator, and a terminal connector 13 made up of a cylindrical body 14 with external threading 15, which is crossed axially by a circumferential succession of holes 16 communicating with the suction tube 11. An appendix 17 with rectangular section that constitutes a male plug with two steady pins 18 also extends outwards from the external face of the cylindrical body 14. The electric plug 17, shown only schematically in Fig. 5, is connected electrically (in a manner not shown) to a source of electric power situated inside the suction group 10.

A connection device 1 like that in Figures 1-3, that comprises essentially an electric cable 19 placed inside a flexible tube 20 along the longitudinal axis of the same, is placed, as already said, between the electric tool 2 and the suction group 10.

The connection device 1 is fitted with two terminal connectors 21 and 22, respectively destined to the rigid separable coupling with the connectors 4 and 13 of the tool 2 and of the suction group 10.

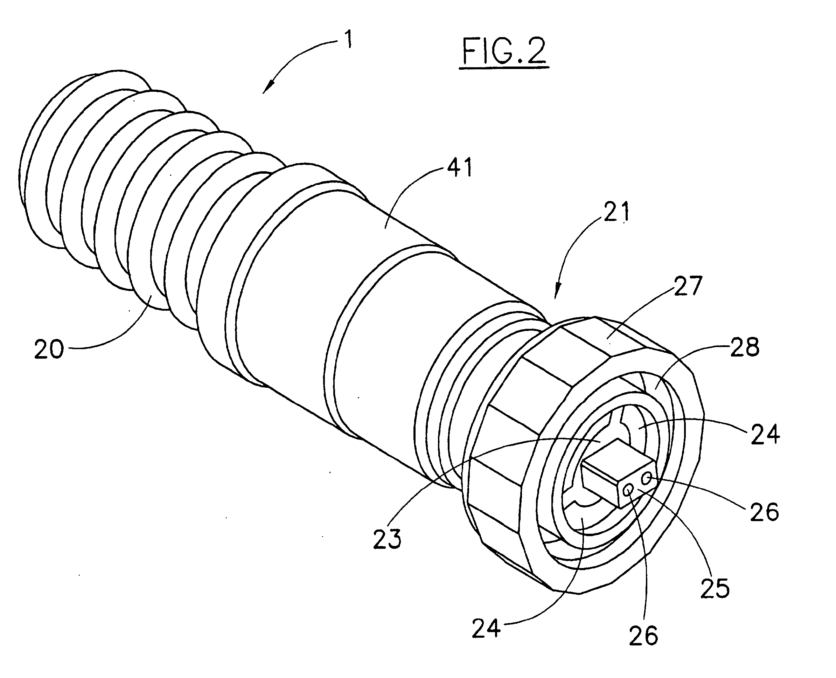

For this purpose, as can be seen from Figures 1 and 2, the terminal connector 21 comprises a cylindrical metal body 23 fastened to one end of the electric cable 19 and crossed axially by a circumferential succession of holes 24 and an external axial appendix 25 with rectangular section, constituting a male electric plug, with two cylindrical centring holes 26. The terminal connector 21 also comprises a cup-shaped ferrule 27, revolvingly positioned coaxially outside the cylindrical body 23 and fitted with internal threading 28. On the cylindrical body 23 there is also positioned a revolving body 40 with internal serrated surface, to which a sleeve 41 is hooked in turn fastened to the flexible tube 20.

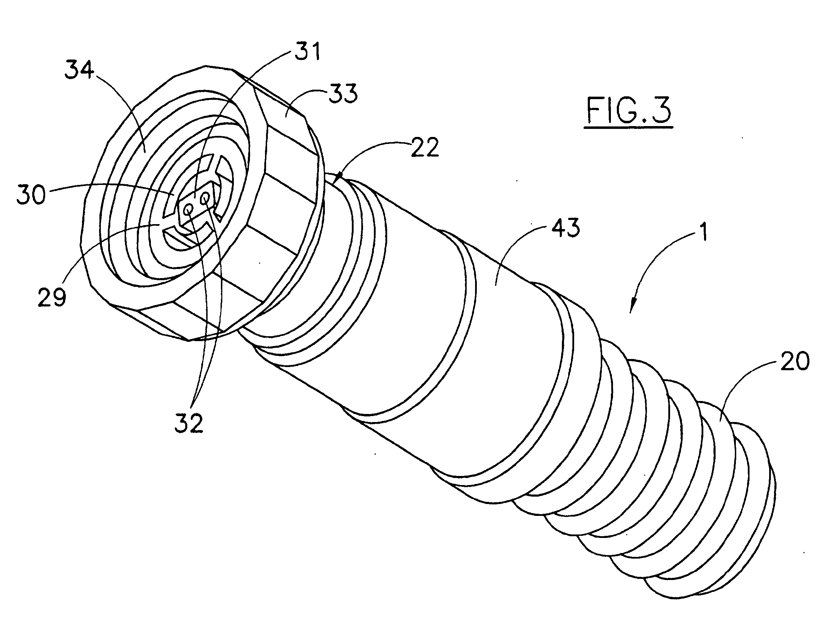

As can be seen from Figures 1 and 3, the terminal connector 22 comprises in turn a cylindrical metal body 29 fastened to one end of the electric cable 19 and crossed axially by a circumferential succession of holes 30. A cavity 31 with rectangular section constituting an electric female socket with two steady pins 32 extends from the external face of the cylindrical body 29 inside the same body. The terminal connector 22 also comprises a cup-shaped ferrule 33, revolvingly positioned coaxially outside the cylindrical body 29 and fitted with internal threading 34. On the cylindrical body 29 there is also positioned a revolving body 42 with external serrated surface, to which a sleeve 43 is hooked in turn fastened to the flexible tube 20.

In use, the terminal connector 21 of the connection device 1 is coupled to the terminal connector 4 of the portable electric tool 2 by plugging the electric plug 25 in the electric cavity 8 and engaging the threading 28 of the ferrule 27 with the threading 6 of the body 5. Similarly, the terminal connector 22 of the connection device 1 is coupled to the terminal connector 13 of the suction and electric power group 10 by inserting the electric plug 17 in the electric cavity 31 and engaging the threading 34 of the ferrule 33 with the threading 15 of the body 14. When the fastening is completed the flexible tube 20 can rotate in relation to the electric cable 19.

Thanks to the communicating holes 7, 24, 30 and 16 the flexible tube 20 can thus connect the dust suction conduit 3 of the tool 2 to the aspirator contained in the group 10 and thanks to the plug-socket connections 8-25 and 17-31 the electric cable 19, comfortably housed inside the flexible tube 20, can in turn make the electrical connection of the same tool 2 to the electric power source of the same group 10.

## Claims

1. Connection device for electric power and dust suction for a portable electrical tool for machining surfaces, comprising a flexible tube for the suction of machining dust, an electric cable (19) completely housed inside the flexible tube (20), a first terminal connector (21) with male electric plug (25) and a second terminal connector (22) with female electric socket (31), **characterised in that** said first terminal connector (21) comprises a metal body (23) fastened to one end of the electric cable (19) and crossed axially by a circumferential succession of holes (24) and an external axial appendix (25) constituting said male electric plug, said first terminal connector (21) comprising also an internally threaded ferrule (27) positioned coaxially outside said metal body (23), said flexible tube (20) being revolvingly fixed to said metal body (23), and said second terminal connector (22) comprises a metal body (29) fastened to one end of the electric cable (19) and crossed axially by a circumferential succession of holes (30), said metal body (29) being fitted frontally with a cavity (31) constituting said female electric socket and said second terminal connector (22) also comprising an internally threaded ferrule (33) positioned coaxially outside said metal body (29), said flexible tube (20) being revolvingly fixed to said metal body (29).

2. Connection device according to claim 1, **characterised in that** said electric cable (19) is positioned along the longitudinal axis of said flexible tube (20).

3. Apparatus for machining surfaces, comprising a portable electrical tool, suction and electric power means and a connection device suitable for connecting said tool to said suction and electric power means, said connection device comprising a flexible tube for dust suction, an electric cable completely housed inside the flexible tube, a first terminal connector (21) with male electric plug (25) and a second terminal connector (22) with female electric socket (31), **characterised in that** said first terminal connector (21) comprises a metal body (23) fastened to one end of the electric cable (19) and crossed axially by a circumferential succession of holes (24) and an external axial appendix (25) constituting said male electric plug, said first terminal connector (21) also comprising an internally threaded ferrule (27) positioned coaxially outside said metal body (23), said flexible tube (20) being revolvingly fixed to said metal body (23), and said second terminal connector (22) comprises a metal body (29) fastened to one end of the electric cable (19) and crossed axially by a circumferential succession of holes (30), said metal body (29) being fitted frontally with a cavity (31) constituting said female electric socket and said second terminal connector (22) also comprising an internally threaded ferrule (33) positioned coaxially outside said metal body (29), said flexible tube (20) being revolvingly fixed to said metal body (29).

4. Apparatus according to claim 3, **characterised in that** said electric cable (19) is positioned along the longitudinal axis of said flexible tube (20).

5. Apparatus according to claim 3 or 4, **characterised in that** said first terminal connector (21) can be coupled to a terminal connector (4) of the portable electric tool (2) which is fitted with female electric socket (8) and through axial holes (7) that communicate with said dust suction conduit (3) and are aligned, when coupling is achieved, with said holes (24) of said first terminal connector (21) of the connection device (1) and said second terminal connector (22) can be coupled to a terminal connector (13) of the electric power and dust suction group (10) which is fitted with male electric socket (17) and through axial holes (16) that communicate with a dust suction tube (12) and are aligned, when coupling is achieved, with said holes (30) of said second terminal connector (22) of the connection device (1).

## Patentansprüche

1. Anschlussvorrichtung für elektrische Energie und zur Staubabsaugung für ein transportables elektrisches Werkzeug zur Flächenbearbeitung, welche einen flexiblen Schlauch zur Absaugung von bei der maschinellen Bearbeitung anfallendem Staub, ein elektrisches Kabel (19), welches vollständig im Innern des flexiblen Schlauches (20) aufgenommen ist, ein erstes Anschlussstück (21) mit einem elektrischen Einschubsteckerteil (25) und ein zweites Anschlussstück (22) mit einem elektrischen Aufnahmesteckteil (31) aufweist, **dadurch gekennzeichnet, dass** das erste Anschlussstück (21) einen metallischen Körper (23) aufweist, welcher fest mit einem Ende des elektrischen Kabels (19) verbunden ist und in axialer Richtung mit einer Umfangsabfolge von Öffnungen (24) durchzogen ist, und einen externen, axialen Fortsatz (25) aufweist, welcher das elektrische Einschubsteckteil bildet, das erste Anschlussstück (21) auch eine mit Innengewinde versehene Überwurfmutter (27) aufweist, welche koaxial außenseitig an dem Metallkörper (23) angeordnet ist, der flexible Schlauch (20) drehbar an dem metallischen Körper (23) festgelegt ist, und das zweite Anschlussstück (22) einen metallischen Körper (29) aufweist, welcher fest mit einem Ende des elektrischen Kabels (19) verbunden ist und axial mit einer Umfangsabfolge von Öffnungen (30) durchzogen ist, der metallische Körper (29) vorderseitig mit einem Holraum (31) versehen ist, welcher das elektrische Aufnahmesteckteil bildet, und das zweite Anschlussstück (22) auch eine mit Innengewinde versehene Überwurfmutter (33) aufweist, welche koaxial außenseitig zu dem metallischen Körper (29) angeordnet ist, und dass der flexible Schlauch (20) drehbar an dem metallischen Körper (29) festgelegt ist.

2. Anschlussvorrichtung nach Anspruch 1, **dadurch gekennzeichnet, dass** das elektrische Kabel (19) längs der Längsachse des flexiblen Schlauches (20) angeordnet ist.

3. Vorrichtung zur maschinellen Bearbeitung von Oberflächen, welche ein tragbares elektrisches Werkzeug, eine Absaugeinvorrichtung, eine elektrische Versorgungseinrichtung sowie eine Anschlusseinrichtung aufweist, welche zur Verbindung des Werkzeuges mit der Absaugeinrichtung und der elektrischen Energieversorgungseinrichtung dient, wobei die Anschlusseinrichtung einen flexiblen Schlauch zur Staubabsaugung, ein elektrisches Kabel, welches vollständig im Innern des flexiblen Schlauches untergebracht ist, ein erstes Anschlussstück (21) mit einem Einschubsteckerteil (25) und ein zweites Anschlussstück (22) mit einem elektrischen Aufnahmesteckteil (22) aufweist, **dadurch gekennzeichnet, dass** das erste Anschlussstück (21) einen metallischen Körper (23) aufweist, welcher fest mit einem Ende des elektrischen Kabels (19) verbunden ist und axial durch eine Umfangsabfolge von Öffnungen (24) durchsetzt ist und einen external axialen Fortsatz (25) hat, welcher das elektrischen Einschubsteckteil bildet, das erste Anschlussstück (21) auch eine mit Innengewinde versehene Überwurfmutter (27) aufweist, welche koaxial außenseitig zu dem metallischen Körper (23) angeordnet ist, der flexible Schlauch (20) drehbar an dem metallischen Körper (23) festgelegt ist, und das zweite Anschlussstück (22) den metallischen Körper (29) aufweist, welcher fest mit einem Ende des elektrischen Kabels (19) verbunden ist und axial durch Umfangsabfolge von Öffnungen (30) durchsetzt ist, der metallische Körper (29) vorderseitig mit einem Hohlraum (31) versehen ist, welcher das elektrische Aufnahmesteckteil bildet und das zweite Anschlussstück (22) auch eine mit einem Innnengewinde versehene Überwurfmutter (33) aufweist, welche koaxial außenseitig zu dem metallischen Körper (29) angeordnet ist, und dass der flexible Schlauch (20) drehbar an dem metallischen Körper (29) festgelegt ist.

4. Vorrichtung nach Anspruch 3, **dadurch gekennzeichnet, dass** das elektrische Kabel (19) längs der Längsachse des flexiblen Schlauches (20) angeordnet ist.

5. Vorrichtung nach Anspruch 3 oder 4, **dadurch gekennzeichnet, dass** das erste Anschlussstück (21) mit einem Anschlussverbinder (4) des tragbaren elektrischen Werkzeugs (2) verbunden werden kann, welches mit einem elektrischen Aufnahmesteckteil (8) und Durchgangsöffnungen (7) versehen ist, welche in kommunizierender Verbindung mit der Staubabsaugleitung (3) stehen und bei einer Ausrichtung im Zuge des Verbindungsvorganges mit den Öffnungen (24) des ersten Anschlussstücks (21) der Verbindungseinrichtung (1) ausgerichtet ist und das zweite Anschlussstück (22) mit einem Anschlussverbinder (13) der elektrischen Energieversorgung und der Staubabsauggruppe (10) verbunden werden kann, welche passend zu dem elektrischen Aufnahmesteckteil (17) ausgebildet ist, und dass die axialen Durchgangsöffnungen (16) mit einem Staubabsaugschlauch (12) in kommunizierender Verbindung stehen und im Zuge des Verbindungsvorganges mit den Öffnungen (30) des zweiten Anschlussstückes (22) der Verbindungseinrichtung ausgerichtet sind.

## Revendications

1. Dispositif de connexion d'alimentation électrique et d'aspiration de poussière pour un outil électrique portatif d'usinage de surfaces, comprenant un tube flexible pour l'aspiration de la poussière d'usinage, un câble électrique (19) entièrement logé à l'intérieur du tube flexible (20), un premier connecteur à borne (21) équipé d'une fiche électrique mâle (25) et un second connecteur à borne (22) équipé d'une douille électrique femelle (31), **caractérisé en ce que** ledit premier connecteur à borne (21) comprend un corps métallique (23) fixé à une extrémité du câble électrique (19) et traversé axialement par une succession circonférentielle de trous (24) et un appendice axial extérieur (25) constituant ladite fiche électrique mâle, ledit premier connecteur à borne (21) comprenant également une virole taraudée (27) positionnée axialement à l'extérieur dudit corps métallique (23), ledit tube flexible (20) étant fixé à rotation audit corps métallique (23), et ledit second connecteur à borne (22) comprend un corps métallique (29) fixé à une extrémité du câble électrique (19) et traversé axialement par une succession circonférentielle de trous (30), ledit corps métallique (29) étant équipé frontalement d'une cavité (31) constituant ladite douille électrique femelle et ledit second connecteur à borne (22) comprenant également une virole taraudée (33) positionnée coaxialement à l'intérieur dudit corps métallique (29), ledit tube flexible (20) étant fixé à rotation audit corps métallique (29).

2. Dispositif de connexion selon la revendication 1, **caractérisé en ce que** ledit câble électrique (19) est positionné le long de l'axe longitudinal dudit tube flexible (20).

3. Appareil d'usinage de surfaces, comprenant un outil électrique portatif, des moyens d'aspiration et d'alimentation électrique et un dispositif de connexion approprié pour connecter ledit outil auxdits moyens d'aspiration et d'alimentation électrique, ledit dispositif de connexion comprenant un tube flexible en vue de l'aspiration de poussière, un câble électrique logé entièrement à l'intérieur du tube flexible, un premier connecteur à borne (21) équipé d'une fiche électrique mâle (25) et un second connecteur à borne (22) équipé d'une douille électrique femelle (31), **caractérisé en ce que** ledit premier connecteur à borne (21) comprend un corps métallique (23) fixé à une extrémité du câble électrique (19) et traversé axialement par une succession circonférentielle de trous (24) et un appendice axial extérieur (25) constituant ladite fiche électrique mâle, ledit premier connecteur à borne (21) comprenant également une virole taraudée (27) positionnée coaxialement à l'extérieur dudit corps métallique (23), ledit tube flexible (20) étant fixé à rotation audit corps métallique (23), et ledit second connecteur à borne (22) comprend un corps métallique (29) fixé à une extrémité du câble électrique (19) et traversé axialement par une succession circonférentielle de trous (30), ledit corps métallique (29) étant muni frontalement d'une cavité (31) constituant ladite douille électrique femelle et ledit second connecteur à borne (22) comprenant également une virole taraudée (33) disposée coaxialement à l'extérieur dudit corps métallique (29), ledit tube flexible (20) étant fixé à rotation audit corps métallique (29).

4. Appareil selon la revendication 3, **caractérisé en ce que** ledit câble électrique (19) est positionné le long de l'axe longitudinal dudit tube flexible (20).

5. Appareil selon la revendication 3 ou 4, **caractérisé en ce que** ledit premier connecteur à borne (21) peut être couplé à un connecteur à borne (4) de l'outil électrique portatif (2) qui est muni d'une douille électrique femelle (8) et par l'intermédiaire de trous axiaux (7) qui communiquent avec ledit conduit d'aspiration (3) et sont alignés, lorsque le couplage est obtenu, avec lesdits trous (24) dudit premier connecteur à borne (21) du dispositif de connexion (1) et ledit second connecteur à borne (22) peut être couplé à un connecteur à borne (13) du groupe d'alimentation électrique et d'aspiration de poussière (10) qui est équipé d'une douille électrique mâle (17) et par l'intermédiaire de trous axiaux (16) qui communiquent avec un tube d'aspiration de poussière (12) et sont alignés, lorsque le couplage est obtenu, avec lesdits trous (30) dudit second connecteur à borne (22) du dispositif de connexion (1).
